# EUROPEAN PATENT APPLICATION

(11) **EP 2 541 856 A1**
(43) Date of publication of application: **02.01.2013**
(21) Application number: 11290298.6
(22) Date of filing: 30.06.2011
(51) Int. Cl.: H04L 12/58, G06F 17/21

(54) **Method for multi-tag cloud views of email**

(71) Applicant: Alcatel Lucent, 75007 Paris (FR)
(72) Inventor: Pergament, David, 91620 Nozay (FR); Picault, Jerome, 91620 Nozay (FR); Bouzid, Makram, 91620 Nozay (FR)
(74) Representative: Shamsaei Far, Hassan

(57) **Abstract**

The invention concerns a method of displaying email messages to a user of a terminal, on a display screen of said terminal, with a tag cloud view, the method comprising the steps of, on the terminal of the user,
reading an email message by means of a email reader, characterized in that the method comprises the further steps of,
sending said email message to the tag cloud generator, said tag cloud generator generating a tag cloud view of said email message,
storing said tag cloud view of said email message in a tag cloud views database, and then,
sending from said tag cloud views database said generated tag cloud view of said email message to the tag cloud viewer,

displaying to the screen of the user's terminal said generated tag cloud view of said email message.

## Description

### Field of the Invention

The invention relates to a method to display email with a multi-tag cloud view, and a device configured to perform said method.

### Background

Users are more and more overwhelmed with messages such as emails (either personal ones or corporate ones).

Thus, the Wall Street Journal (in an article of 11/27/07) reported stats and projection from the Radicaty group¹ about the average number of corporate emails sent and received per person, per day: 2007: 142; 2008: 156; 2009: 177; 2010: 199; 2011: 228 and the percent of work day spent managing email for the average corporate email user: 2003: 17%; 2006: 26%; 2009: 41%.

These figures give an idea about the pain users may have in their daily work.

As a result, users are wasting a lot of their time managing emails or if they can't, many emails (such as diffusion lists) are deleted without being read, even if from time to time, they could be extremely useful to the user.

Current email tools such as Thunderbird or MS Outlook are short in providing all the assistance which would be needed in terms of filtering and prioritization of emails.

Systems such as organization by folders or tags are useful, but are quite limited, as they require that users read and analyze the content of the emails by themselves (a posteriori manual classification).

In particular, those systems do not let users have a quick overview of the content of the email (except the first few words or the first few lines which are generally displayed in a small pop-up when a new message arrives).

This is not enough to provide an.efficient filtering mechanism.

Thus, there is a need of a method that enables users to have a quick overview of incoming/outgoing email messages (a kind of quick summary to assess its importance), but this should be done according to the point of view of the user at the time he is interested about the message (i.e. depending on the context / the sender, the user may be more interested in the style, the tone of the message or key content elements: for example, when sending an email to a V.I.P. the user may want to quickly check several dimensions: that the key elements of the content of the message appear, that the tone of the message is all right.

Current solutions are uneasy, not user-friendly.

We propose a method to display email with a multi-tag cloud view.

Further developments of the invention can be gathered from the following description.

In the following the invention will be explained further making reference to the attached drawing.

### Brief Description of the Figures

Fig. 1 shows a drawing depicting the invention in a global view.
Fig. 2 shows a drawing depicting a method according to an other embodiment of the invention.

In this invention, we provide a solution to quickly provide an overview of emails through different tag-cloud views, each view corresponding to a different perspective versus the message.

This solution enables a better filtering, retrieval and organization of messages. For example, when applied to a thread of emails or to the whole set of emails associated to a person, it enables to have a better understanding of this person's usual content topics, her way of speaking and interacting and thus enables to better adapt the user's message to her.

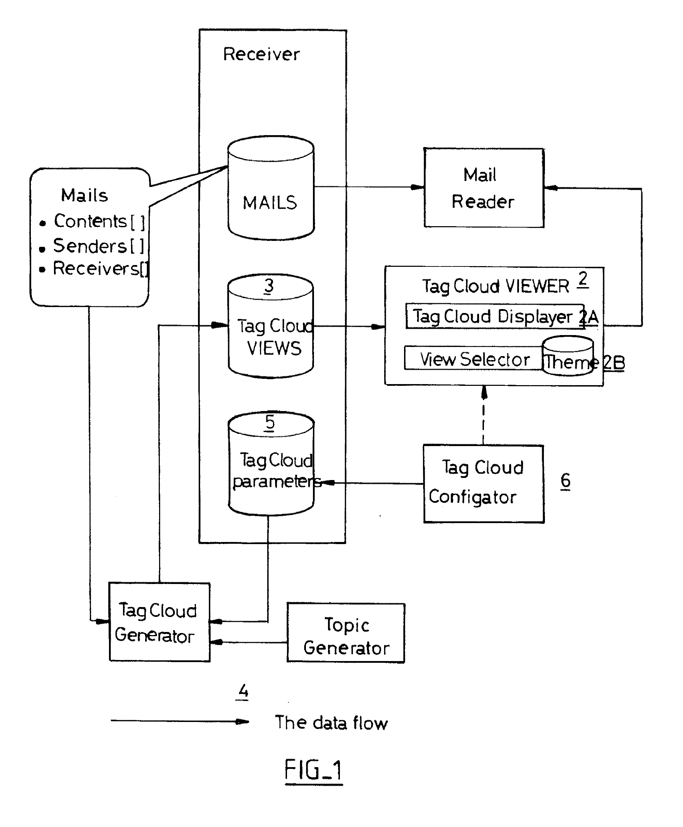

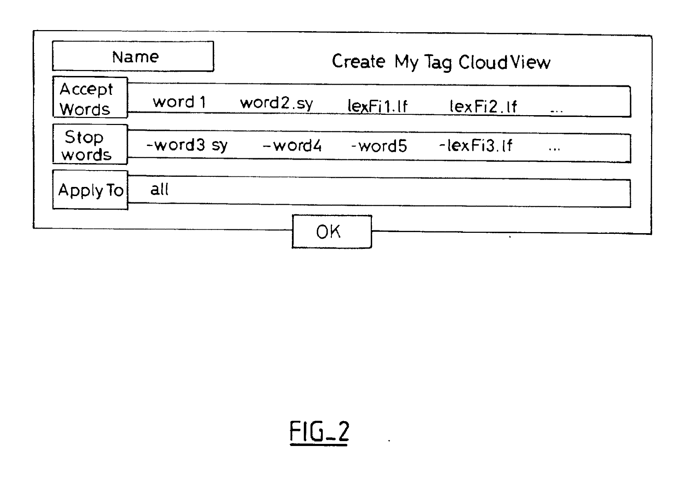

The invention, referring to figure 1 and 2, teaches a method display email with a multi-tag cloud view.

The invention is globally is described by the elements and modules listed below (see 1).

There is no constraint on the distribution of the modules; they can run locally on the user's device (PC or mobile phone) or can run on the email server (this depends mainly on whether the invention is sold as an independent plug-in for the email client or as a core functionality that can be included within the server).

The **email reader** component is the usual email client (in charge of sending and receiving emails). The email reader is connected to a tag cloud viewer.

The **tag cloud viewer** is responsible for displaying to the user the tag cloud associated to an email. An example of possible display is shown on Figure 1. The tag cloud viewer is composed of two key elements: a tag view selector and a tag cloud displayer.

The **tag cloud selector** lets the user choose between different possible views. The user can switch between predefined views or user-defined ones. As shown on Figure 3, a tag cloud can extract two different types of information from emails: the ones based on *substance,* and the ones based on *style:*
*"Substance"* Tag Clouds extract information related to the *"what"* of the email(s); what words, what sentences are relevant for describing content. Such possible tag clouds may be based on:
   - Classical summary: the tag cloud is generated based on the term frequency, the words that are the most used are selected as a summary of the email and displayed to the user; the more frequent a word is, the more important the size of its font is. Data are previously pre-processed with lemmatization/stemmatization algorithms (like the Porter Algorithm), and we may use also a classical stop word lists (like the one composed by 671 words enumerated in http://www.ranks.nl/resources/stopwords.html) to eliminate words as "the", "have". We can moreover adapt this list to email content, for example: we may add words like "email", and remove words like "important".
   - Urgency: the tag cloud is generated based on a list of accept words related to different urgency terms, such as "ASAP", "urgent", "deadline", "quickly", etc., and identification of dates' and hours' formats;
   - Emotion: the tag cloud is generated through opinion mining / sentiment analysis techniques to present to the user either the set of tags that reveal the emotion of the sender or of the receiver. Positive tags may be displayed e.g. in green whereas negative tags may appear in red.
   - Novelty: this tag cloud is not only based on the single email, but takes into account the thread (or the family) it belongs to: this category of tag cloud will display the original or novel terms compared to previous messages. This can be extremely useful in the case of a mailing list, to quickly detect emails that introduce potentially relevant new elements

### Style Tag Clouds extract information about the "how" of the email

- Language: the tag cloud is generated based on words of the email that denote a particular language style (such as personal or professional; formal or not, etc.) This may be useful for example to check if your tone is correct with respect to the way your receiver has already interacted with you. It may also be interesting to have a quick overview of the form of an email you have received, especially if given person doesn't interact every time in the same way with you.
- Salutation: this tag cloud regroups words related to the form of someone direct to you of an email (or describing a people). As for the "Language" tag cloud, this may be useful to know how to communicate with a given user.
- Typography: the tag cloud is generated based on typographic elements of the email, such as words in bold, italic, headlines, majuscules, etc. (which often denote the point of view of the author of the email w.r.t. some words or sentences)

Contexts associated to Tag Clouds: Moreover, each view has to take into account what we called the email context: is the user interested in the content of a single email? Of all the emails from a particular individual (sender/receiver)? Of all the emails from a particular thread? Within a given period? This is defined through a context associated to tag clouds.

As an example, based on the following email:
*Folks,*
*since two minutes ago, we're now live with our Domain home on intranet!*

*I want to acknowledge the two folks who made our new Domain portal on Engage possible: Silke explored many of the options that were laid out in front of us and helped us converge on the right platform. Andre then build on this and with his fantastic creativity and out-of-the-box thinking very quickly found cool ways to make engage fit our needs. Check out the result yourself. Big thanks for Andre and Silke!*

*All - please also check out the respective pages of your Department. If you don't like what you see, or you believe it incorrectly describes your group, please complain loudly to your Department Head. It was their responsibility to provide updated information and cool group photos. You might agree that some of the Department photos are not exactly spreading excitement and energy! If you agree, put pressure on your Department Head and submit a cooler photo :)*

*So, please join the group !*

*Thanks,*
*Markus*

We may obtain the following tag clouds according to several dimensions:
- term frequency: "department" ; "engage" ; "domain" ; "group"; "please"; "check"
- Typography: "IMPORTANT - please also join our new company-wide Engage group!"
- emotion: "complain loudly"; "fantastic creativity"; "cool ways"; "big thanks"; "cool group"; "cooler photos"
- Language style: "cool"; ";)"; "big"; "please"
- Salutation: "folks"; "thanks, Markus"

This example shows that the different dimensions bring a different perspective on the content of the email.

A user can select one or several tag cloud views. A view can be associated to an email according to its characteristics (e.g. sender, priority).

This includes for example displaying the tag cloud(s) either in different windows (one for each tag cloud) or in the same one but with different colors for tags associated to different dimensions.

Specific configurations can be stored by the user as a theme in a theme database.

The **tag cloud displayer** is in charge of rendering the tag cloud(s) associated to the view(s) selected by the user.

In another embodiment, the tag cloud itself can be summarized and presented to the user through a single *topic* (i.e. a single word) describing the whole email according to a specific view.

This is particularly relevant for some categories such as language which can be classified as friendly/serious, formal/informal, etc.

For example, a tag cloud based on the language register can be used to generate a metatag "everyday language", which may be easier to display to the user (or that can be presented to the user together with the tag cloud associated to another dimension).

The tag clouds can be computed offline.

The **tag cloud views database** contains - for each email of the user (or sometimes group of emails, or period, depending on the "contexts") - a set of pre-computed tag clouds associated to the views that the user usually consults.

The tag clouds stored in the tag cloud view database are computed by the **tag cloud generator,** thanks to a state-of-the-art algorithm, which takes as inputs:
- one or several emails (e.g. one single email, an email thread or the whole set of emails from a specific sender, or a period of time),
- the parameters stored in the **tag cloud parameters database,** which are used to configure the tag cloud generator in order to generate a view-specific tag cloud.

The list of parameters stored in the **tag cloud parameters database** for each view includes:
- the name of the view (optional)
- a list of stop words: in order to take into account only relevant words, stop word lists are broadly used for the pretreatment of text documents in applications that used *information retrieval* techniques (like TF-IDF).

In our case, by default, all the words of an email will be selected to generate a tag view, except the ones that figured in its stop word list.

Moreover, (see the **tag cloud configurator** paragraph) we enrich this mechanism by letting the possibility to remove automatically the synonyms (or the linked terms) of a stop word, by simply adding the extension ".sy" or ".*lf*" at the end of the word.

The thesaurus that allows to retrieve synonyms (.sy) and lexical fields (.lf) can be stored directly on the user computer, or we can imagine the system uses online API, like Wikipedia/Dbpedia or Wordnet (for French texts : the website of the CNRTL, "Centre National de Ressources Textuelles et Lexicales", allows to retrieve synonyms and proxemics)
- A list of accept words: the alternative mechanism to the stop words list. At the opposite, when this list is not empty, the words that are not included into it won't be taken into account in the tag cloud view. Same options for synonyms and lexical field are also available.
- a Boolean value (optional) indicating if it is possible / meaningful to extract a topic (metatag) from the tag cloud; if so, it contains also the set of rules allowing to infer the topic.

In case the parameter of the view indicates that it is meaningful to generate a topic, then, in addition to usual processing, the tag cloud generator calls a **topic generator** module which is in charge of generating a topic based on **topic generation rules** stored in the tag cloud parameters database.

A simple reasoner such as a rule-based engine may be used for that purpose. The topic generator may for example be used to derive the topic/metatag "friendly" or "serious" for the dimension 'language-style' from the set of tags extracted from the email about that dimension, such as "folks", "you guys", "cool group", etc.

In addition, user can generate his own email tag cloud.

The **tag cloud configurator** provides an interface (see **Erreur ! Source du renvoi introuvable**. for a possible example) to let the user specify his own tag cloud generation parameters, including for example a list of accept and stop words, as well as filter about the kind of messages it may apply

It may be especially interesting in an enterprise environment, or in an expert context, where the vocabulary may be very specific (the well known "enterprise jargon").

Such views can be created by a user, and then can be shared within the organization so that it can benefit to other users.

Furthermore, to complete the synonym retrieval system described in the previous paragraph, the user has the possibility to create his own lexical field. We may imagine that the company gives to its employees files containing specific vocabularies, related to a given enterprise subject/project (or that a list is created by a user and shared with his colleagues).

As with all other views, user-defined view definitions are stored as a new configuration in the **tag cloud parameters database,** the tag cloud generator processes it in the same way as other parameters and the associated tag cloud is made available in the tag cloud views database and is therefore made available for display.

The present invention may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of displaying email messages to a user of a terminal, on a display screen of said terminal, with a tag cloud view, the method comprising the steps of, on the terminal of the user,
reading an email message by means of a email reader (1), **characterized in that** the method comprises the further steps of,
sending said email message to the tag cloud generator (4), said tag cloud generator (4) generating a tag cloud view of said email message,
storing said tag cloud view of said email message in a tag cloud views database (3), and then,
sending from said tag cloud views database(3) said generated tag cloud view of said email message to the tag cloud viewer (2),
displaying to the screen of the user's terminal said generated tag cloud view of said email message.

2. A method according to claim 1, **characterized in that** the method comprises the further step of selection by the user at least one specific tag cloud view of said email message by means of the tag cloud view selector (2B) and sending said at least one specific tag cloud view to the screen of the user's terminal by means of a tag cloud view displayer (2A), said tag cloud view selector (2B) and said tag cloud view displayer (2A) being part of the tag cloud viewer (2) .

3. A method according to any of the preceding claims, **characterized in that** the terminal of the user is either a video terminal or a personal computer.

4. A computer program product comprising computer-executable instructions for performing a method, when the program is run on a computer, of displaying email messages to a user of a terminal, on a display screen of said terminal, with a tag cloud view, the method comprising the steps of, on the terminal of the user,
reading an email message by means of a email reader (1), **characterized in that** the method comprises the further steps of,
sending said email message to the tag cloud generator (4), said tag cloud generator (4) generating a tag cloud view of said email message,
storing said tag cloud view of said email message in a tag cloud views database (3), and then,
sending from said tag cloud views database(3) said generated tag cloud view of said email message to the tag cloud viewer (2),
displaying to the screen of the user's terminal said generated tag cloud view of said email message.

5. A *device programmed or configured to perform a method* of displaying email messages to a user of a terminal, on a display screen of said terminal, with a tag cloud view, the method comprising the steps of, on the terminal of the user,
reading an email message by means of a email reader (1), **characterized in that** the method comprises the further steps of,
sending said email message to the tag cloud generator (4), said tag cloud generator (4) generating a tag cloud view of said email message,
storing said tag cloud view of said email message in a tag cloud views database (3), and then,
sending from said tag cloud views database(3) said generated tag cloud view of said email message to the tag cloud viewer (2),
displaying to the screen of the user's terminal said generated tag cloud view of said email message.
